# EUROPEAN PATENT APPLICATION

(11) **EP 4 775 926 A1**
(43) Date of publication of application: **15.07.2026**
(21) Application number: 25787648.2
(22) Date of filing: 05.06.2025
(51) Int. Cl.: G01B 11/30, G01N 21/88, G01N 21/94, G06T 7/00, H01M 10/42

(54) **METHOD FOR INSPECTING SURFACE ROUGHNESS OF CYLINDRICAL BATTERY THROUGH SURFACE BRIGHTNESS, DEVICE FOR PERFORMING SAME, AND STORAGE MEDIUM HAVING RECORDED THEREON PROGRAM FOR EXECUTING SAME**

(30) Priority: 08.11.2024 KR 20240157663
(71) Applicant: LG Energy Solution, Ltd., Seoul 07335 (KR)
(72) Inventor: PARK, Seonghwan, Daejeon 34122 (KR); PARK, Sungwoo, Daejeon 34122 (KR); YANG, Jaeho, Daejeon 34122 (KR); KIM, Iksu, Daejeon 34122 (KR)
(74) Representative: Goddar, Heinz J.
(86) International application number: PCT/KR2025/007682
(87) International publication number: WO 2026/100872

(57) **Abstract**

A method for inspecting surface roughness of a cylindrical battery using surface brightness include acquiring, by an inspector, an inspection image of the cylindrical battery to which illumination is applied, and acquiring, by a surface roughness inspector, surface roughness of an area corresponding to a terminal of the cylindrical battery using the inspection image. A device for inspecting surface roughness of a cylindrical battery using surface brightness is also provided.

## Description

### [Technical Field]

The present disclosure relates to a method for inspecting surface roughness of a cylindrical battery using surface brightness, a device for performing the same, and a storage medium recording a program for executing the same.

### [Background Art]

Currently, commercialized secondary batteries include nickel cadmium batteries, nickel hydrogen batteries, nickel zinc batteries, and lithium secondary batteries. Among these, lithium secondary batteries are receiving attention due to their advantages such as almost no effect on memory compared to nickel-based secondary batteries, free charging and discharging, very low self-discharge rate, and high energy density.

Recently, secondary batteries (batteries) have been widely used for driving or energy storage in vehicles such as electric two-wheelers and electric cars, and medium and large devices such as an energy storage system (ESS). As a result, interest in batteries is increasing, and research and development related to batteries are being conducted more actively. Furthermore, in the case of batteries used in vehicles, commercialization and research on exchangeable common battery packs are also being actively conducted.

Lithium secondary batteries mainly use lithium oxide and carbon material as positive electrode active materials and negative electrode active materials, respectively. In addition, the lithium secondary battery has an electrode assembly in which positive and negative electrode plates, to which the positive and negative electrode active materials are respectively applied, are arranged with a separator between them, and an outer case (that is, a battery case) that seals and stores the electrode assembly together with an electrolyte. Depending on the shape of the outer case, lithium secondary batteries can be classified into can-type secondary batteries in which the electrode assembly is built into a metal can and pouch-type secondary batteries in which the electrode assembly is built into a pouch of an aluminum laminate sheet. In addition, the can-type secondary batteries can be further classified into square secondary batteries and cylindrical secondary batteries depending on their shapes.

A plurality of secondary batteries may be electrically connected to each other and housed together inside a module case (module housing) or pack case (pack housing), thereby forming a battery module or battery pack. In this case, each secondary battery included in the battery module or battery pack may be referred to as a battery cell.

In particular, when welding the positive electrode collector plate of the cylindrical battery and the positive terminal of the CAN, weldability differences occur depending on the quality of the two welding materials, so welding quality control is important. In the case of the rivet type positive terminal of the CAN, the main factors affecting the welding of the positive electrode collector plate and the positive terminal include surface roughness, flatness, and hardness. Among the main factors, in the case of the surface roughness, there are two conventional surface roughness inspection methods, that is, a contact surface roughness inspection and a non-contact roughness inspection. The contact surface roughness inspection has the limitation that it is practically impossible to perform a full inspection. The non-contact surface roughness inspection may perform the full inspection, but has the problem of low precision.

### [Disclosure]

### [Technical Problem]

According to one embodiment of the present disclosure, a method of inspecting surface roughness of a cylindrical battery using surface brightness, a device configured to perform the same, and a non-transitory computer-readable storage medium recording a program for executing the same may be provided in order to inspect the surface roughness of the cylindrical battery using the surface brightness.

The problem to be solved in the present disclosure is not limited to the problem mentioned above, and can be expanded in various ways without departing from the spirit and scope of the present disclosure.

### [Technical Solution]

A method of inspecting surface roughness of a cylindrical battery using surface brightness according to one embodiment of the present disclosure includes: acquiring, by an inspector, an inspection image of the cylindrical battery to which illumination is applied; and acquiring, by a surface roughness inspector, surface roughness of an area corresponding to a terminal of the cylindrical battery using the inspection image.

The area corresponding to the terminal is an area where a positive terminal of the cylindrical battery is welded.

The acquiring the surface roughness may include measuring surface brightness of the area where the positive terminal is welded, and acquiring the surface roughness of the cylindrical battery based on the measured surface brightness.

The acquiring the surface roughness of the cylindrical battery based on the measured surface brightness uses a preset relationship between the surface brightness and the surface roughness.

The method may further include acquiring whether the cylindrical battery is defective based on the surface roughness of the cylindrical battery.

The acquiring of whether the cylindrical battery is defective may include determining that the cylindrical battery is defective when the surface roughness of the cylindrical battery is equal to or more than a preset roughness reference value.

The inspector may be an in-line inspector configured to measure floating foreign matter and dimensions of the cylindrical battery.

The acquiring the inspection image and the acquiring of the surface roughness may be performed by the in-line inspector.

A non-transitory computer-readable storage medium according to one embodiment of the present disclosure stores a program for controlling a computer to execute any one of the methods of inspecting the surface roughness of the cylindrical battery using the surface brightness described above.

A device configured to inspect surface roughness of a cylindrical battery using surface brightness according to one embodiment of the present disclosure includes: a memory configured to store one or more programs for inspecting the surface roughness of the cylindrical battery; and one or more processors configured to perform an operation for inspecting the surface roughness of the cylindrical battery according to the one or more programs stored in the memory, the operation for inspecting the surface roughness of the cylindrical battery includes acquiring an inspection image of the cylindrical battery to which illumination is applied, and acquiring surface roughness of an area corresponding to a terminal of the cylindrical battery using the inspection image.

The area corresponding to the terminal is an area where a positive terminal of the cylindrical battery is welded.

The processor may be further configured to measure surface brightness of the area where the positive terminal is welded and acquire the surface roughness of the cylindrical battery based on the measured surface brightness.

The processor may be configured to acquire the surface roughness of the cylindrical battery based on the measured surface brightness using a preset relationship between the surface brightness and the surface roughness.

The processor may be further configured to acquire whether the cylindrical battery is defective based on the surface roughness of the cylindrical battery.

The processor may be configured to acquire whether the cylindrical battery is defective based on the surface roughness of the cylindrical battery by determining that that the cylindrical battery is defective when the surface roughness of the cylindrical battery is equal to or more than a preset roughness reference value.

The processor may be configured to acquire the inspection image for the cylindrical battery through an in-line inspector configured to measure floating foreign matter and dimensions of the cylindrical battery.

The device for inspecting surface roughness may be integral with the in-line inspector, and the acquiring the inspection image and the acquiring surface roughness are performed by the in-line inspector.

### [Advantageous Effects]

According to one embodiment of the present disclosure, by inspecting the surface roughness of the cylindrical battery using the surface brightness, it is possible to secure welding quality of a positive electrode collector plate of the cylindrical battery and a positive terminal of a CAN, and parts management is possible through a full inspection.

In addition, according to one embodiment of the present disclosure, loss can be reduced by preventing defects in semi-finished products, and costs caused by welding defects can be reduced.

The effects according to various embodiments of the present disclosure are not limited to the effects described above, and it is obvious to those skilled in the art that various effects are inherent in the present disclosure.

### [Description of Drawings]

FIG. 1 is a block diagram for explaining a device for inspecting surface roughness of a cylindrical battery using surface brightness according to one embodiment of the present disclosure.
FIG. 2 is a diagram for explaining an example of an in-line inspector illustrated in FIG. 1.
FIG. 3 is a block diagram for explaining the configuration of the device for inspecting surface roughness illustrated in FIG. 1.
FIG. 4 is a flowchart for explaining a method for inspecting surface roughness of a cylindrical battery using surface brightness according to one embodiment of the present disclosure.
FIG. 5 is a diagram for explaining an example of an area where a positive terminal of a cylindrical battery is welded in an inspection image according to one embodiment of the present disclosure.
FIG. 6 is a diagram for explaining a relationship between surface brightness and surface roughness according to one embodiment of the present disclosure, and illustrates surface roughness of each set of a cylindrical battery.
FIG. 7 is a diagram for explaining the relationship between the surface brightness and the surface roughness according to one embodiment of the present disclosure, and illustrates the surface brightness of each set of the cylindrical battery.
FIG. 8 is a drawing for explaining the relationship between the surface brightness and the surface roughness according to one embodiment of the present disclosure, and illustrates a 1:1 matching scatter plot between the surface roughness and the surface brightness.

### [Mode for Disclosure]

Hereinafter, embodiments of the present disclosure will be described in detail with reference to the attached drawings. The advantages and features of the embodiments of the present disclosure, and the methods for achieving them, will become clear with reference to the contents described in detail below together with the attached drawings. However, the embodiments of the present disclosure are not limited to the embodiments published below, but can be implemented in various different forms, and the embodiments of the present disclosure are only defined by the scope of the claims.

Throughout the specification, the same reference numerals refer to the same components. Unless otherwise defined, all terms (including technical and scientific terms) used in the present specification may be used in a sense that can be commonly understood by a person of ordinary skill in the art to which the embodiments of the present disclosure belong. In addition, terms defined in commonly used dictionaries shall not be ideally or excessively interpreted unless explicitly specifically defined.

In the present specification, the terms "first", "second", or the like are intended to distinguish one component from another, and the scope of the rights should not be limited by these terms. For example, the first component may be referred to as the second component, and similarly, the second component may also be referred to as the first component.

In the present specification, the identification symbols (for example, a, b, c, or the like) for each step are used for convenience of explanation, and the identification symbols do not describe the order of each step, and each step may occur in a different order than the stated order unless the context clearly indicates a specific order. That is, each step may occur in the same order as the stated order, may be performed substantially simultaneously, or may be performed in the opposite order.

In the present specification, expressions such as "have", "may have", "include", or "may include" indicate the presence of a corresponding feature (for example, a component such as a number, function, operation, or part), and do not exclude the presence of additional features.

Hereinafter, with reference to the attached drawings, a method for inspecting surface roughness of a cylindrical battery using surface brightness according to one embodiment of the present disclosure, a device for performing the same, and a storage medium recording a program for executing the same are described in detail.

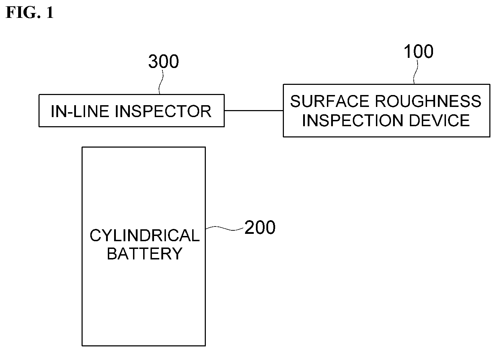

First, the device for inspecting the surface roughness of the cylindrical battery using surface brightness according to one embodiment of the present disclosure will be described with reference to FIG. 1.

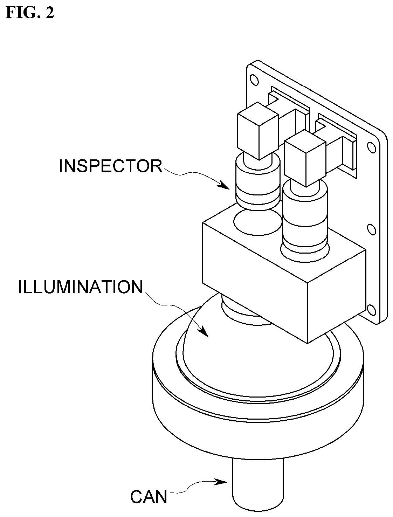

FIG. 1 is a block diagram for explaining the device for inspecting surface roughness of the cylindrical battery using the surface brightness according to one embodiment of the present disclosure, and FIG. 2 is a drawing for explaining an example of an in-line inspector illustrated in FIG. 1.

Referring to FIG. 1, the device (hereinafter, referred to as a "surface roughness inspection device") 100 for inspecting the surface roughness of the cylindrical battery using the surface brightness according to one embodiment of the present disclosure may inspect the surface roughness of a cylindrical battery 200 using the surface brightness.

In this case, the surface roughness inspection device 100 may acquire the surface brightness of the cylindrical battery 200 based on the image acquired through an in-line inspector 300, and inspect the surface roughness of the cylindrical battery 200 based on the acquired surface brightness.

Here, the in-line inspector 300 refers to a device used to measure floating foreign matter and dimensions of the cylindrical battery 200. That is, referring to FIG. 2, the in-line inspector 300 may apply illumination to a "CAN", which is a cylindrical battery 200. Then, the in-line inspector 300 may capture an inspection image by photographing the "CAN", which is the cylindrical battery 200 in a state where the illumination is on. Then, the in-line inspector 300 may inspect whether floating foreign matter exists in the "CAN", which is the cylindrical battery 200, using an image analysis algorithm or the like based on the acquired inspection image.

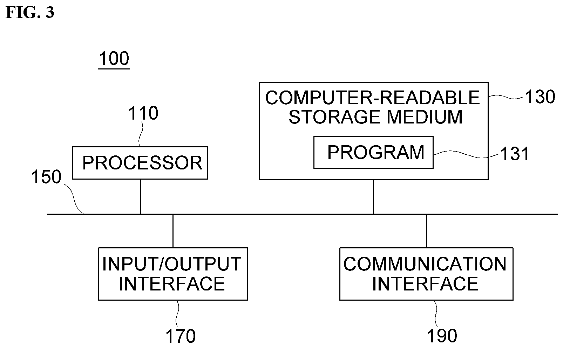

Then, the configuration of the surface roughness inspection device according to one embodiment of the present disclosure will be described with reference to FIG. 3.

FIG. 3 is a block diagram for explaining the configuration of the surface roughness inspection device illustrated in FIG. 1.

Referring to FIG. 3, the surface roughness inspection device 100 may include one or more processors 110, a computer-readable storage medium 130, and a communication bus 150.

The processor 110 may control the surface roughness inspection device 100 to operate. For example, the processor 110 may execute one or more programs 131 stored in the computer-readable storage medium 130. The one or more programs 131 may include one or more computer-executable instructions, and the computer-executable instructions, when executed by the processor 110, may be configured to cause the surface roughness inspection device 100 to perform the operation for inspecting the surface roughness of a cylindrical battery.

The computer-readable storage medium 130 is configured to store computer-executable instructions or program code, program data, and/or other suitable forms of information for inspecting the surface roughness of the cylindrical battery. The program 131 stored in the computer-readable storage medium 130 includes a set of instructions executable by the processor 110. In one embodiment, the computer-readable storage medium 130 may be a memory (volatile memory such as random-access memory, nonvolatile memory, or a suitable combination thereof), one or more magnetic disk storage devices, optical disk storage devices, flash memory devices, any other form of storage medium that can be accessed by the surface roughness inspection device 100 and store desired information, or a suitable combination thereof.

The communication bus 150 interconnects various other components of the surface roughness inspection device 100, including the processor 110 and the computer-readable storage medium 130.

The surface roughness inspection device 100 may also include one or more input/output interfaces 170 providing interfaces for one or more input/output devices and one or more communication interfaces 190. The input/output interface 170 and the communication interface 190 are connected to the communication bus 150. The input/output device (not illustrated) may be connected to other components of the surface roughness inspection device 100 via the input/output interface 170.

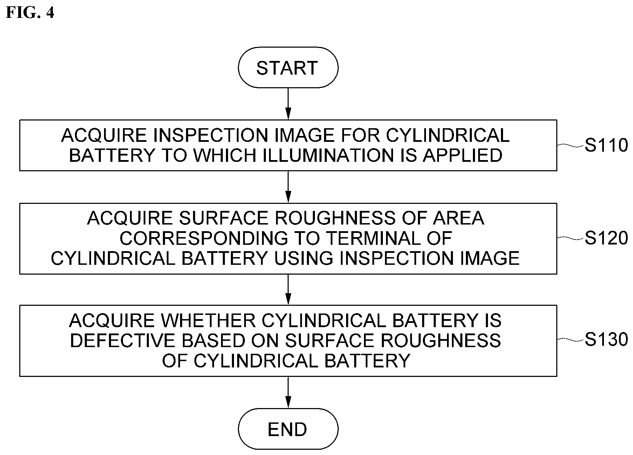

Then, with reference to FIGS. 4 to 8, a method for inspecting the surface roughness of the cylindrical battery using the surface brightness according to one embodiment of the present disclosure will be described.

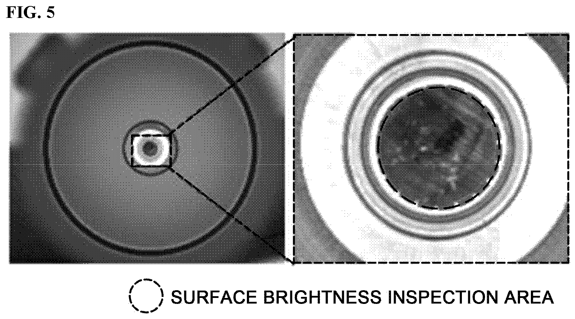

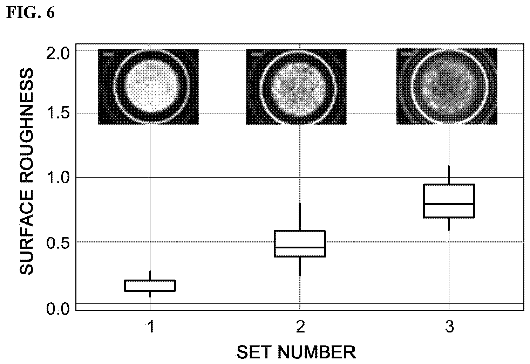

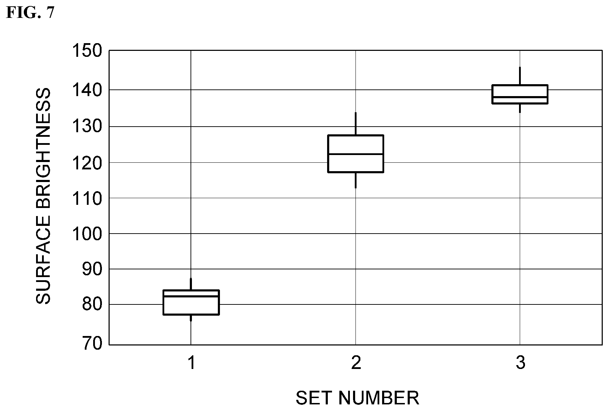

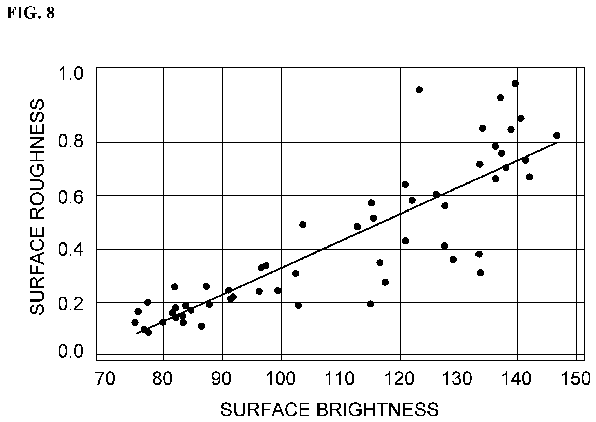

FIG. 4 is a flowchart for explaining the method for inspecting the surface roughness of the cylindrical battery using the surface brightness according to one embodiment of the present disclosure, FIG. 5 is a diagram for explaining an example of an area where a positive terminal of the cylindrical battery is welded in an inspection image according to one embodiment of the present disclosure, FIG. 6 is a diagram for explaining a relationship between surface brightness and surface roughness according to one embodiment of the present disclosure, and illustrates surface roughness of each set of a cylindrical battery, FIG. 7 is a diagram for explaining the relationship between the surface brightness and the surface roughness according to one embodiment of the present disclosure, and illustrates the surface brightness of each set of the cylindrical battery, and FIG. 8 is a drawing for explaining the relationship between the surface brightness and the surface roughness according to one embodiment of the present disclosure, and illustrates a 1:1 matching scatter plot between the surface roughness and the surface brightness.

Referring to FIG. 4, the processor 110 of the surface roughness inspection device 100 may acquire an inspection image for the cylindrical battery 200 to which illumination is applied (S110).

In this case, the processor 110 may acquire the inspection image for the cylindrical battery 200 using the in-line inspector 300.

Then, the processor 110 may acquire the surface roughness of an area corresponding to a terminal of the cylindrical battery 200 using the inspection image (S120).

That is, the processor 110 may acquire the surface roughness of the area where the positive terminal of the cylindrical battery 200 is welded.

To explain in more detail, the processor 110 may measure the surface brightness of the area where the positive terminal of the cylindrical battery 200 is welded. For example, in an inspection image illustrated in FIG. 5, the surface brightness of a "surface brightness inspection area", which is the area where the positive terminal of the cylindrical battery 200 is welded, may be measured.

Moreover, the processor 110 may acquire the surface roughness of the cylindrical battery 200 based on the measured surface brightness. In this case, the processor 110 may acquire the surface roughness of the cylindrical battery 200 based on the measured surface brightness by using a preset relationship between the surface brightness and the surface roughness.

Here, the relationship between the surface brightness and the surface roughness may be acquired and set based on the surface brightness and the surface roughness measured for a plurality of sets of cylindrical batteries 200 in advance. For example, the surface roughness may be measured for the sets of cylindrical batteries 200 as illustrated in FIG. 6. Moreover, the surface brightness may be measured for the sets of cylindrical batteries 200 as illustrated in FIG. 7. Based on the surface brightness and the surface roughness measured for the sets of cylindrical batteries 200, a 1:1 matching scatter plot may be acquired as illustrated in FIG. 8. Moreover, the relationship between the surface brightness and the surface roughness may be acquired based on the acquired 1:1 matching scatter plot between the surface roughness and the surface brightness.

Thereafter, the processor 110 may acquire whether the cylindrical battery 200 is defective based on the surface roughness of the cylindrical battery 200 (S130).

In this case, the processor 110 may determine that the cylindrical battery 200 is defective when the surface roughness of the cylindrical battery 200 is equal to or more than a preset roughness reference value.

In other words, in order to manage the welding quality of the positive electrode collector plate of the cylindrical battery and the positive terminal of the CAN, a full inspection of the surface roughness is required. For example, in the barrel process, which is one of the single product manufacturing processes utilizing rivets, when the process management is insufficient, the surface roughness of the rivet weld increases, and when the surface roughness exceeds a certain roughness value, there is a problem that the weldability deteriorates (reduction in tensile strength, deterioration of fracture mode, or the like). However, considering that with the existing contact-type surface roughness inspection method, it is practically impossible to perform the full inspection, and the existing non-contact surface roughness inspection method has a problem of low precision, one embodiment of the present disclosure adopts the surface brightness, which is a characteristic correlated with the surface roughness, as a substitute characteristic of surface roughness, so that the surface roughness can be indirectly measured through the surface brightness, and the full inspection of the surface roughness for weldability management can be performed more easily.

Meanwhile, although the surface roughness inspection device 100 is implemented as a physically separate device from the in-line inspector 300, and the surface roughness inspection device 100 is described as performing the inspection image acquisition operation, the surface roughness acquisition operation, and the operation for acquiring whether there is defectiveness, this is only one example, and according to an embodiment, the surface roughness inspection device 100 may be implemented in an integrated form with the in-line inspector 300. In this case, the inspection image acquisition operation, the surface roughness acquisition operation, and the defect determination operation may be performed by the in-line inspector 300. That is, the in-line inspector 300 may perform the floating foreign matter inspection operation while also performing the inspection image acquisition operation, the surface roughness acquisition operation, and the defect determination operation.

The operations according to the embodiments of the present disclosure described above may be implemented in the form of program commands that can be executed through various computer means and recorded on a computer-readable storage medium. The computer-readable storage medium refers to any medium that participates in providing commands to a processor for execution. The computer-readable storage medium may include program commands, data files, data structures, or a combination thereof. For example, there may be a magnetic medium, an optical storage medium, a memory, or the like. The computer program may be distributed on a network-connected computer system so that the computer-readable code is stored and executed in a distributed manner. Functional programs, codes, and code segments for implementing the embodiments of the present disclosure may be easily inferred by programmers in the technical field to which the embodiments of the present disclosure belong.

The embodiments of the present disclosure are intended to explain the technical idea, and the scope of the technical idea of the embodiments of the present disclosure is not limited by these embodiments. The protection scope of the embodiments of the present disclosure should be interpreted by the scope of the claims below, and all technical ideas within the scope equivalent thereto should be interpreted as being included in the scope of the rights of the embodiments of the present disclosure.

### [Detailed Description of Main Elements]

100: surface roughness inspection device
110: processor
130: computer readable storage medium
131: program
150: communication bus
170: input/output interface
190: communication interface
200: cylindrical battery
300: in-line inspector

## Claims

1. A method of inspecting surface roughness of a cylindrical battery using surface brightness, the method comprising:
acquiring, by an inspector, an inspection image of the cylindrical battery to which illumination is applied; and
acquiring, by a surface roughness inspector, surface roughness of an area corresponding to a terminal of the cylindrical battery using the inspection image.

2. The method of claim 1, wherein the area corresponding to the terminal is an area where a positive terminal of the cylindrical battery is welded.

3. The method of claim 2, wherein the acquiring the surface roughness includes:
measuring surface brightness of the area where the positive terminal is welded; and
acquiring the surface roughness of the cylindrical battery based on the measured surface brightness.

4. The method of claim 3, wherein the acquiring the surface roughness of the cylindrical battery based on the measured surface brightness uses a preset relationship between the surface brightness and the surface roughness.

5. The method of claim 1, further comprising acquiring whether the cylindrical battery is defective based on the surface roughness of the cylindrical battery.

6. The method of claim 5, wherein the acquiring whether the cylindrical battery is defective includes determining that the cylindrical battery is defective when the surface roughness of the cylindrical battery is equal to or more than a preset roughness reference value.

7. The method of claim 1, wherein the inspector is an in-line inspector configured to measure floating foreign matter and dimensions of the cylindrical battery.

8. The method of claim 7, wherein the acquiring the inspection image and the acquiring of the surface roughness are performed by the in-line inspector.

9. A non-transitory computer-readable storage medium recording a program for causing a computer to execute the method of claim 1.

10. A device configured to inspect surface roughness of a cylindrical battery using surface brightness, the device comprising:
a memory configured to store one or more programs for inspecting the surface roughness of the cylindrical battery; and
one or more processors configured to perform an operation for inspecting the surface roughness of the cylindrical battery according to the one or more programs stored in the memory, the operation for inspecting the surface roughness of the cylindrical battery including:
acquiring an inspection image of the cylindrical battery to which illumination is applied, and
acquiring surface roughness of an area corresponding to a terminal of the cylindrical battery using the inspection image.

11. The device of claim 10, wherein the area corresponding to the terminal is an area where a positive terminal of the cylindrical battery is welded.

12. The device of claim 11, wherein the processor is further configured to:
measure the surface brightness of the area where the positive terminal is welded; and
acquire the surface roughness of the cylindrical battery based on the measured surface brightness.

13. The device of claim 12, wherein the processor is configured to acquire the surface roughness of the cylindrical battery based on the measured surface brightness using a preset relationship between the surface brightness and the surface roughness.

14. The device of claim 10, wherein the processor is further configured to acquire whether the cylindrical battery is defective based on the surface roughness of the cylindrical battery.

15. The device of claim 14, wherein the processor is configured to acquire whether the cylindrical battery is defective based on the surface roughness of the cylindrical battery by determining that the cylindrical battery is defective when the surface roughness of the cylindrical battery is equal to or more than a preset roughness reference value.

16. The device of claim 10, wherein the processor is configured to acquire the inspection image for the cylindrical battery through an in-line inspector configured to measure floating foreign matter and dimensions of the cylindrical battery.

17. The device of claim 16, wherein the device for inspecting surface roughness is integral with the in-line inspector, and
wherein the acquiring the inspection image and the acquiring surface roughness are performed by the in-line inspector.
